Europäisches Patentamt

European Patent Office

Office européen des brevets

(19)

(11) **EP 1 463 226 A2**

(12) **EUROPEAN PATENT APPLICATION**

(43) Date of publication:
**29.09.2004 Bulletin 2004/40**

(51) Int Cl.$^7$: **H04L 1/06**, H04L 1/00

(21) Application number: **04003319.3**

(22) Date of filing: **13.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **25.03.2003 KR 2003018433**<br><br>(71) Applicants:<br>• **Samsung Electronics Co., Ltd.**<br>  **Suwon-city, Gyeonggi-do (KR)**<br>• **Seoul National University Industry Foundation**<br>  **Seoul 151-050 (KR)** | (72) Inventors:<br>• **Shin, Oh-Soon, Samsung Electronics Co., Ltd.**<br>  **Suwon-si, Gyeonggi-do (KR)**<br>• **Nam, Seung-Hoon,**<br>  **Samsing Electronics Co., Ltd.**<br>  **Suwon-si, Gyeonggi-do (KR)**<br>• **Lee, Kwang-BokSamsung Electronics Co., Ltd.**<br>  **Suwon-si, Gyeonggi-do (KR)**<br><br>(74) Representative: **Grünecker, Kinkeldey,**<br>  **Stockmair & Schwanhäusser Anwaltssozietät**<br>  **Maximilianstrasse 58**<br>  **80538 München (DE)** |

(54) **Wireless communication apparatus and method using multi-transmission/reception antenna system**

(57)     A wireless communication apparatus includes a base station having M antennas to communicate with K user terminals through a wireless channel. The base station includes a data rate information recoverer for recovering from feedback signals received from the K user terminals data rate information indicating an available data rate of each subchannel from the M antennas; a subchannel and data rate assignment information generator for assigning the M subchannels to the K user terminals according to the data rate information and determining data rates of the assigned subchannels; and a transmitter for transmitting data for the selected M user terminals to the M user terminals via the assigned M antennas at the determined data rates. If K is greater than or equal to M, the subchannel and data rate assignment information generator assigns the M subchannels to the M user terminals selected from the K user terminals on a round robin basis, in each time slot.

FIG.1

EP 1 463 226 A2

## Description

The present invention relates generally to a wireless communication system with multiple transmission/reception antennas, and in particular, to a wireless communication apparatus and method for forming a plurality of space subchannels using multiple transmission/reception antennas and efficiently assigning the space subchannels to a plurality of users.

Conventional time division multiplexing (TDM) or code division multiplexing (CDM) wireless communication systems have been developed for low-speed data service such as a voice service. Such conventional wireless communication systems are not suitable for future wireless communication system that requires high-speed multimedia transmission. In order to realize high-speed transmission, it is necessary to develop technology capable of improving utilization efficiency of limited frequency resources. Recently, multi-transmission/reception antenna technology has been proposed as typical technology for improving the efficiency.

A multi-transmission/reception antenna system uses a plurality of transmission/reception antennas and applies appropriate space-time signal processing technology in a transceiver to improve utilization efficiency of frequency, thereby achieving a high data rate with a limited bandwidth. It is well known that an achievable maximum data rate is related to the capacity of a wireless channel over which a signal is transmitted, and the theoretical capacity of a wireless channel having a sufficient number of transmission paths is approximately proportional to the number of transmission/reception antennas (see G. J. Foschini and M. J. Gans, "On Limits Of Wireless Communications In A Fading Environment When Using Multiple Antennas", Wireless Personal Communications, pp. 311-355, March 1998).

In the multi-transmission/reception antenna system, in order to obtain a maximum data rate, both a transmitter and a receiver must perform space-time signal processing using channel state information (see G. G. Raleigh and J. M. Cioffi, "Spatio-temporal Coding For Wireless Communication", IEEE Transactions on Communications, pp. 357-366, March 1998). In this method, a great amount of channel information must be fed back from a receiver to a transmitter, causing an increase in hardware complexity of the transmitter and the receiver.

However, in a known V-BLAST system, a transmitter does not require channel information and only a receiver performs signal processing using the channel state information (see G. J. Foschini, "Simplified Processing For High Spectral Efficiency Wireless Communication Employing Multi-element Arrays", IEEE Journal on Selected Areas in Communications, pp. 1841-1852, Nov. 1999). Compared with the method in which the channel state information is used in a transmitter, the V-BLAST method suffers only a slight decrease in a data rate but can resolve a feedback information problem and a complexity problem of the transmitter and the receiver, thus attracting public attention as practical and important technology.

In a single-antenna TDM wireless communication system, since one frequency channel is divided into a plurality of time slots, only the channels on a time axis are used. In contrast, the multi-transmission/reception antenna system forms a plurality of subchannels in the space domain irrespective of whether a transmitter requires channel state information, and simultaneously transmits different data. Here, the "subchannels" refer to wireless communication paths progressing from each transmission antenna included in a transmitter to a receiver. Due to such characteristics, the multi-transmission/reception antenna system can transmit different data in parallel in the space domain, thus achieving an increased data rate compared with the single-antenna system.

Up to date, most of the research on the multi-transmission/reception antenna system has concentrated on the development of technology capable of increasing data transmission efficiency or reducing transmission error in the single-user system. Since most wireless communication systems must be designed so that a plurality of users can receive a signal from a base station, it is necessary to carry out the research considering a multi-user system.

Since each of user terminals has an independent geographical position and surrounding radio environment, wireless channels between a base station and the respective user terminals are also independent. Therefore, a user having a channel environment appropriate for transmitting data at a specific time (i.e., time slot) and a user having a channel environment inappropriate for transmitting data due to an influence of fading, may exist simultaneously.

As described above, the multi-transmission/reception antenna system forms a plurality of space subchannels using a plurality of transmission antennas, and the formed subchannels show different characteristics. Accordingly, there is a demand for technology for improving performance of a wireless communication system supporting a plurality of user terminals by using the independent channel characteristics of respective users and the subchannels provided by the multi-antenna system.

It is, therefore, the object of the present invention to provide a wireless communication apparatus and method for a wireless communication system having a base station with multiple antennas and user terminals.

This object is solved by the subject matter of the independent claims.

Preferred embodiments are defined in the dependent claims.

It is an aspect of the present invention to provide an apparatus and method for increasing system capacity in a wireless communication system having a base station with multiple antennas and user terminals.

It is further another aspect of the present invention to provide an apparatus and method for separately assigning a plurality of subchannels on a wireless channel to a plurality of user terminals in a multi-transmission/reception antenna system.

In accordance with one aspect of the present invention, there is provided a wireless communication apparatus having a base station having M antennas to communicate with K user terminals through a wireless channel. The base station includes a data rate information recoverer for recovering from a feedback signal received from the K user terminals data rate information indicating an available data rate of each subchannel from the M antennas; a subchannel and data rate assignment information generator for assigning the M subchannels to the K user terminals according to the data rate information and determining data rates of the assigned subchannels; and a transmitter for transmitting data for the selected M user terminals to the M user terminals via the assigned M antennas at the determined data rates. If K is greater than or equal to M, the subchannel and data rate assignment information generator assigns the M subchannels to the M user terminals selected from the K user terminals on a round robin basis, every time slot.

In accordance with another aspect of the present invention, there is provided a method for performing wireless communication by a base station in a wireless communication system having the base station having M antennas to communicate with K user terminals over a wireless channel. The method comprises the steps of recovering from a feedback signal received from the K user terminals data rate information indicating an available data rate of each subchannel from the M antennas ; assigning the M subchannels to the K user terminals every time slot according to the data rate information, determining data rates of the assigned subchannels, and assigning the M subchannels to M user terminals selected from the K user terminals on a round robin basis, in each time slot, when K is greater than or equal to M; and transmitting data for the selected M user terminals to the M user terminals via the assigned M antennas at the determined data rates.

The above features and advantages of the present invention will become more apparent from the following detailed description when taken in conjunction with the accompanying drawings in which:

FIG. 1 is a block diagram illustrating a structure of a multi-transmission/reception antenna system in which each transmission antenna transmits independent data;

FIG. 2 is a block diagram illustrating M space subchannels formed between the transmitter and the receiver of FIG. 1;

FIG. 3 is a diagram illustrating a general wireless communication system including a base station and multiple user terminals;

FIG. 4 is a block diagram illustrating a wireless communication apparatus including a base station with multiple antennas and K user terminals;

FIG. 5 is a flowchart illustrating an operation performed in the wireless communication apparatus of FIG. 4 according to an embodiment of the present invention;

FIG. 6 is a block diagram illustrating a detailed structure of the kth user terminal 22-k among K user terminals of FIG. 4 according to an embodiment of the present invention;

FIG. 7 is a block diagram illustrating a detailed structure of the base station shown in FIG. 4 according to an embodiment of the present invention;

FIG. 8 is a flowchart illustrating an operation of the subchannel and data rate assignment information generator of FIG. 7 according to an embodiment of the present invention;

FIG. 9 is a table illustrating examples of normalized data rates of respective subchannels for M=3 users;

FIGs. 10A to 10F are tables illustrating possible combinations and the sum of associated data rates to find a combination of users and subchannels for maximizing the sum of data rates by using the subchannel information of FIG 9; and

FIGs. 11A to 11D are tables illustrating a procedure for finding a combination of users and subchannels for approximately maximizing the sum of data rates by using the subchannel information of FIG. 9.

Several preferred embodiments of the present invention will now be described in detail with reference to the annexed drawings. In the following description, a detailed description of known functions and configurations incorporated herein has been omitted for conciseness. The terms used herein are defined considering their functions in the invention, and they are subject to change according to users, intentions of the users, or user practice. Therefore, the terms used herein should be defined based on the overall contents of the specification.

The invention efficiently assigns transmission antennas of a base station to a plurality of user terminals in terms of system capacity in a wireless communication system. The wireless communication system includes the base station covering a predetermined service area and the user terminals communicating with the base station within the service area. The base station and the user terminals have multiple antennas. In order to receive a signal from multiple transmission antennas of the base station, each of the user terminals should include a number of reception antennas equal to or greater than the number of the transmission antennas of the base station. This is well known in the multi-transmission/reception antenna system, and a detailed description thereof will be omitted herein for simplicity.

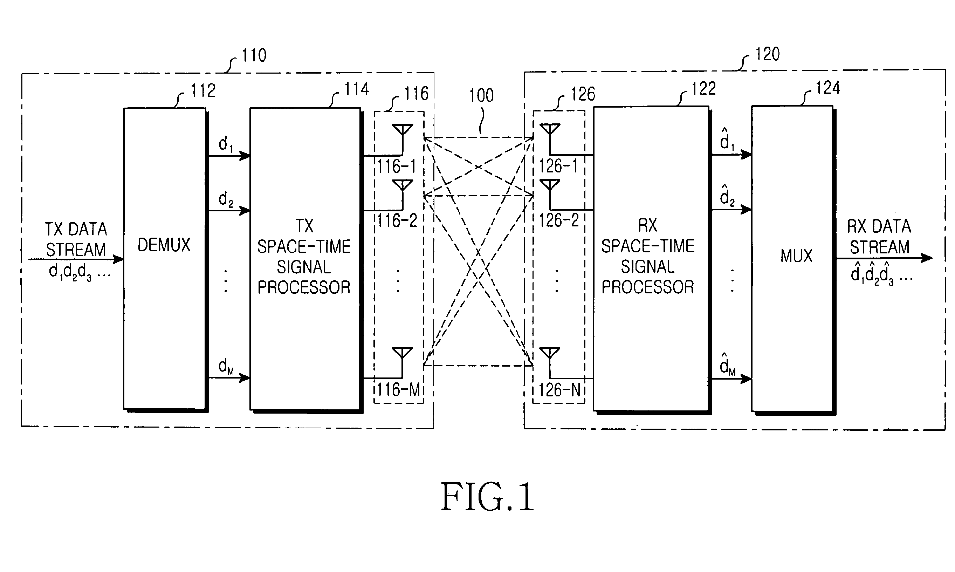

FIG. 1 is a block diagram illustrating a structure of a multi-transmission/reception antenna system in which each transmission antenna transmits independent data according to an embodiment of the present invention. As illustrated, a transmitter 110 includes M transmission antennas 116-1 to 116-M, and a receiver 120 includes N reception antennas 126-1 to 126-N.

Referring to FIG. 1, a coded modulated data stream $d_1 d_2 d_3 \cdots$ is demultiplexed into M sub-data streams by a demultiplexer (DEMUX) 112 and then transmitted through M transmission antennas 116 after being subjected to appropriate signal processing in a transmission space-time signal processor 114. A reception space-time signal processor 122 recovers the transmission data, which are received by N reception antennas 126 after experiencing wireless channels 100, and a multiplexer (MUX) 124 outputs the original data stream from the recovered data. When the number of transmission antennas is greater than M, it is possible to improve error performance by transmitting M different data streams by applying space-time coding technology.

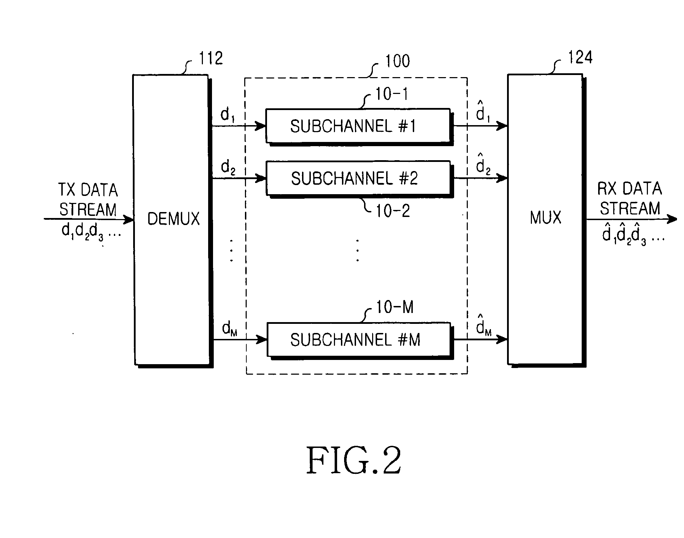

FIG. 2 is a block diagram illustrating M subchannels formed in each time slot in the multi-transmission/reception antenna system of FIG. 1. As illustrated, the transmission space-time signal processor 114, the multiple transmission antennas 116, the wireless channels 100, the multiple reception antennas 126 and the reception space-time signal processor 122 are combined between the transmitter 110 and the receiver 120, equivalently forming M space domain subchannels 10-1 to 10-M.

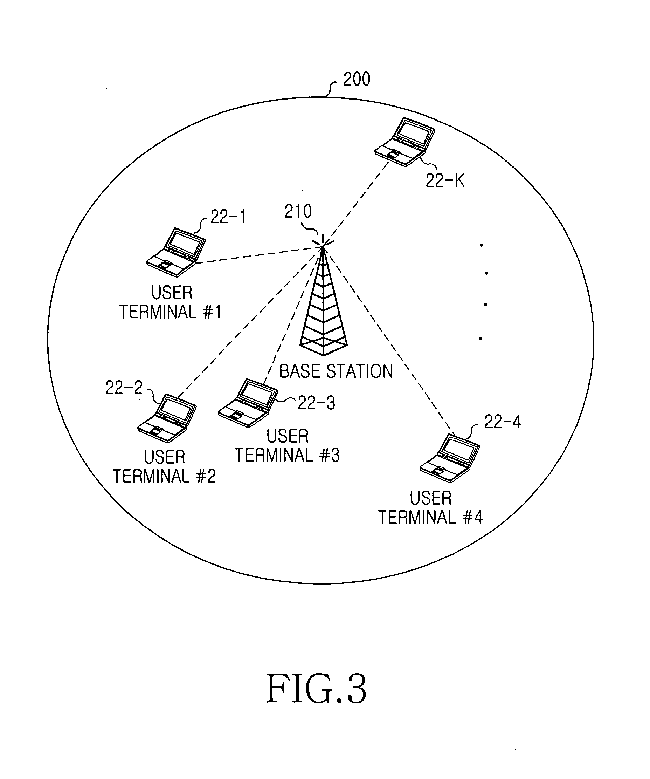

FIG. 3 in a diagram illustrating a cellular wireless communication system including a base station and a plurality of user terminals. As illustrated, the system includes a base station 210 that covers a predetermined service area 200 and a plurality of user terminals 22-1 to 22-K that communicate with the base station 210 within the service area 200.

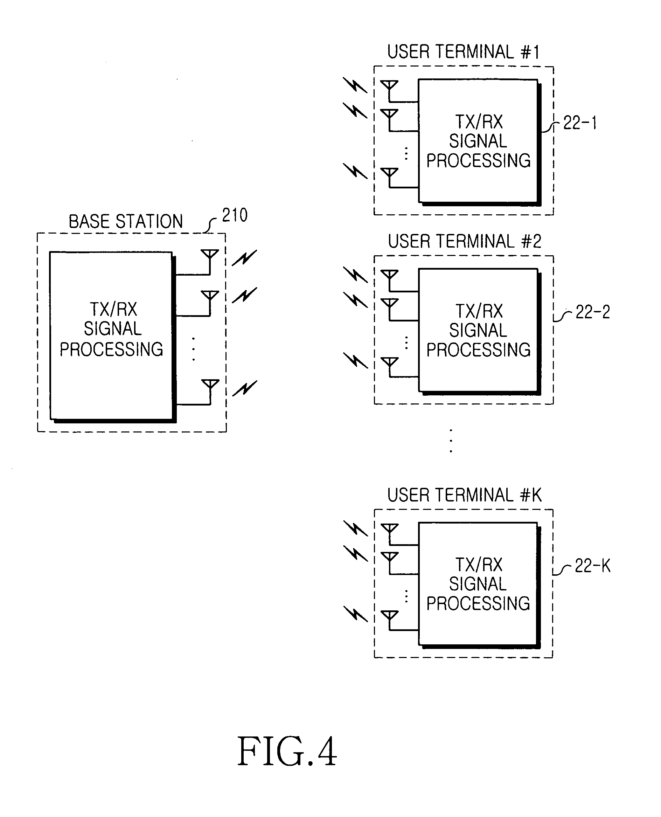

FIG. 4 is a block diagram illustrating a wireless communication apparatus including a base station with multiple antennas and K user terminals. As illustrated, the apparatus includes a base station 210 with Nt transmission antennas and K user terminals 22-1 to 22-K each performing the same function and having Nr(k) reception antennas. M subchannels are formed between the base station 210 and the user terminals 22-1 to 22-K, where M is less than or equal to Nt and Nr(k) (Nt≥M, Nr(k)≥M).

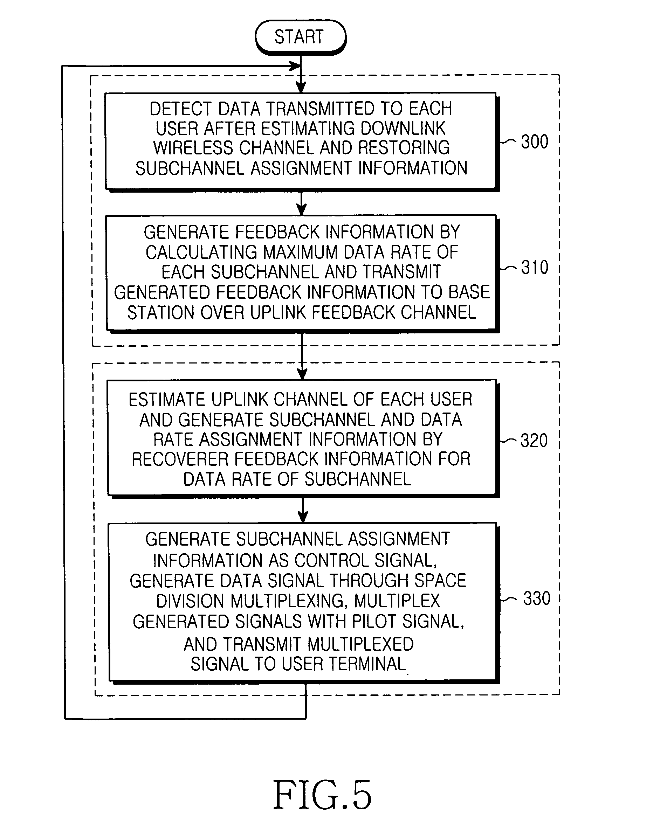

FIG. 5 is a flowchart illustrating an operation performed in the wireless communication apparatus of FIG. 4 according to an embodiment of the present invention, wherein the shown steps are repeatedly performed in each time slot. Steps 300 and 310 are performed in the respective user terminals 22-1 to 22-K, and steps 320 and 330 are performed in the base station 210.

Referring to FIG. 5, in step 300, the $k^{th}$ user terminal 22-k estimates a wireless channel characteristic between the $k^{th}$ user terminal 22-k and the base station 210 using a downlink pilot signal from the base station 210, calculates the channel estimation result in the form of an Nr(k)*Nt matrix $H_D[k]$, and recovers subchannel assignment information from a downlink control signal from the base station 210. The subchannel assignment information is represented by $A=[a_1, a_2, \cdots, a_M]$, where $a_m$ is an index of a user terminal assigned to the $m^{th}$ subchannel. Thereafter, the $k^{th}$ user terminal 22-k recovers data for the $k^{th}$ user transmitted over a data channel according to the channel estimation result and the subchannel assignment information. Here, the data assigned to the $k^{th}$ user refers to data transmitted over a subchannel with $a_m=k$. At this point, the $k^{th}$ user terminal 22-k can optionally recover only the data corresponding to the $k^{th}$ user, or optionally choose only the data corresponding to the $k^{th}$ user after recovering all data.

In step 310, the $k^{th}$ user terminal 22-k determines information on a maximum data rate available for the subchannels based on the channel estimation result $H_D[k]$, and transmits the determined information to the base station 210 over the $k^{th}$ uplink feedback channel. The maximum data rate information is represented by $R[k]=[r_1[k], r_2[k], \cdots, r_M[k]]$, where $r_m[k]$ is feedback information for a data rate available for the $m^{th}$ subchannel of the $k^{th}$ user. The maximum data rate information R[k] is delayed by one time slot T, and then, used for data detection at the next time slot.

In step 320, the base station 210 recovers maximum data rate information R[k] available for subchannels of each user from feedback signals received from the K user terminals 22-1 to 22-K, determines which subchannel should be assigned to which user by using the recovered maximum data rate information, and generates subchannel assignment information A and data rate assignment information $R_A = [r_1[a_1], r_1[a_2], \cdots, r_M[a_M]]$. In step 330, the base station 210 generates a downlink control signal with the subchannel assignment information A, and generates, using the data rate assignment information $R_A$, a data signal for transmitting user data determined based on the subchannel assignment information A over M subchannels formed through spatial multiplexing (SM). Thereafter, the base station 210 multiplexes the generated data signal, downlink control signal and downlink pilot signal, and transmit them to the first to $K^{th}$ user terminals 22-1 to 22-K.

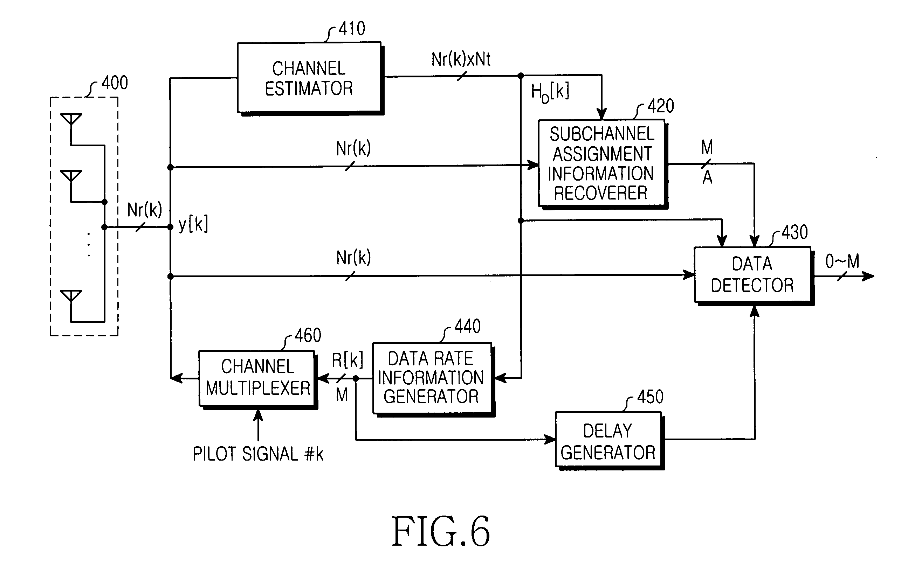

FIG. 6 is a block diagram illustrating a detailed structure of a $k^{th}$ user terminal 22-k among K user terminals of FIG. 4 according to an embodiment of the present invention. The other user terminals also have the same structure. As illustrated, the $k^{th}$ user terminal 22-k includes Nr(k) antennas 400, a channel estimator 410, a subchannel assignment information recoverer 420, a data detector 430, a data rate information generator 440, a delay generator 450 and a channel multiplexer 460.

The multiple antennas 400 receive a downlink pilot signal, a downlink control signal and a data signal from the base station 210. The channel estimator 410 estimates a downlink channel characteristic $H_D[k]$ between the base station 210 and the $k^{th}$ user terminal 22-k from the downlink pilot signal, and delivers the estimation result to the subchannel assignment information recoverer 420, the data detector 430 and the data rate information generator 440.

The subchannel assignment information recoverer 420 recovers subchannel assignment information A from the downlink control signal using the channel characteristic $H_D[k]$ and delivers the recovered subchannel assignment information to the data detector 430, and the data detector 430 detects data corresponding to the $k^{th}$ user from the data signal by using the channel characteristic $H_D[k]$, the subchannel assignment information A and data rate assignment information of a subchannel determined at the previous time slot. If the number of transmission antennas included in the base station 210 is greater than M (Nt=M), a reception data signal y[k] of the $k^{th}$ user is represented by

$$y[k]=H_D[k]Pd+z \qquad (1)$$

In Equation (1), P=diag($p_1$, $p_2$, ···, $p_M$), d=[$d_1$, $d_2$, ···, $d_M$], and z=[$z_1$, $z_2$, ... $Z_{Nr(k)}$], where $p_m$ represents a square root of transmission power of the $m^{th}$ antenna, $d_m$ represents data transmitted over the $m^{th}$ subchannel, i.e., transmitted via the $m^{th}$ transmission antenna, and $z_n$ represents a noise component of the $n^{th}$ reception antenna.

For example, if the data detector 430 consists of a minimum mean square error (MMSE) detector, for $a_m$=k, the $k^{th}$ user can detect data $d_m$ transmitted over the $m^{th}$ subchannel in accordance with Equation (2) below.

$$\hat{d}_m=Q(W_m\,y[k])$$

$$W = \frac{H_D[k]^H}{H_D[k]H_D[k]^H + (M\sigma^2/P_R)I} \qquad (2)$$

In Equation (2), $W_m$ denotes the $m^{th}$ row of W, Q(·) denotes a slicing operation, a superscript H denotes a Hermitian matrix, $\sigma^2$ denotes variance of a noise, and $P_R$ denotes power of a received signal, and I denotes the Nr[k]-dimensional identity matrix. When data is detected in a manner shown in Equation (2), a maximum data rate available for M subchannels can be calculated from a channel characteristic $H_D[k]$ in accordance with Equation (3) below.

$$C_m[k] = \log_2(1+SINR_m[k])$$

$$SINR_m[k] = \frac{P_R|[W[k]H_D[k]]_{mm}|^2}{\sigma^2 M \sum_{n=1}^{M}|[W[k]]_{mn}|^2+P_R \sum_{n=1,n=m}^{M}|[W[k]H_D[k]]_{nm}|^2}$$

$$\ldots\ldots(3)$$

In Equation (3), $SINR_m[k]$ denotes the signal-to-interference plus noise ratio (SINR) of the $m^{th}$ subchannel of the $k^{th}$ user.

The data rate information generator 440 generates an uplink feedback signal using capacities $C_m[k]$ (m=1, 2, ···, M) of M subchannels, calculated by Equation (3). The channel multiplexer 460 then multiplexes the $k^{th}$ feedback signal generated in this way and the $k^{th}$ uplink pilot signal, and transmits the multiplexed signal to the base station 210 via an uplink.

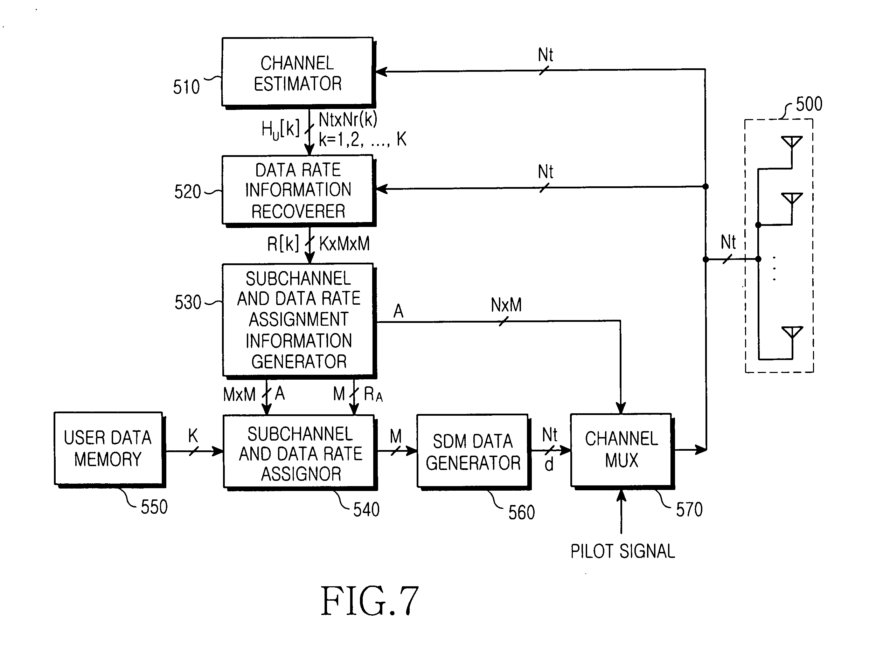

FIG. 7 is a block diagram illustrating a detailed structure of the base station 210 shown in FIG. 4 according to an embodiment of the present invention. As illustrated, the base station 210 includes Nt antennas 500, a channel estimator 510, a data rate information recoverer 520, a subchannel and data rate assignment information generator 530, a subchannel and data rate assignor 540, a user data memory 550, a spatial multiplexing (SM) data generator 560, and a channel multiplexer 570. Here, the multiple antennas 500 are referred to as "combined transmission/reception antennas."

The multiple antennas 500 receive uplink pilot signals and feedback signals from K user terminals 22-1 to 22-K which are communicating in a service area of the base station 210. The channel estimator 510 estimates uplink channel characteristics $H_U[k]$ between the base station and the respective user terminals from the first to $K^{th}$ uplink pilot signals received from the respective user terminals via the multiple antennas 500, and delivers the estimation result to the data rate information recoverer 520. The data rate information recoverer 520 recovers data rate information $R[k]$ for subchannels of each user from the first to $K^{th}$ feedback signals with the channel estimation result and delivers the recovered data rate information to the subchannel and data rate assignment information generator 530. The subchannel and data rate assignment information generator 530 generates subchannel assignment information A and maximum data rate information $R_A$ of an assigned subchannel by considering data rate information $R[k]$ of each user, fairness of wireless resource distribution and priority of users, and delivers the generated information to the subchannel and data rate assignor 540. Further, the subchannel and data rate assignment information generator 530 converts the subchannel assignment information A into a downlink control signal, and the converted downlink control signal is passed to the channel multiplexer 570.

The subchannel and data rate assignor 540 encodes and modulates data from the user data memory 550 to be matched with a data rate of each subchannel according to the subchannel assignment information A and the maximum data rate information $R_A$ of the assigned subchannel, and delivers the encoded and modulated data to the SM data generator 560. The SM data generator 560 generates a data signal d by SM of data received from the subchannel and data rate assignor 540, and delivers the generated data signal to the channel multiplexer 570. The channel multiplexer 570 multiplexes the downlink control signal for subchannel assignment, the data signal and the downlink pilot signal, and transmits the multiplexed signal to the first to $K^{th}$ user terminals 22-1 to 22-K within the corresponding service area via the multiple antennas 500.

In such a wireless communication system, the subchannel and data rate assignment information generator 530 of the base station 210 selects M user terminals among a total of the K user terminals 22-1 to 22-K in communication every time slot on a round robin basis according to the number M of the transmission/reception antennas included in the base station 210, and assigns M subchannels to the selected M user terminals so that system throughput is optimized according to data rate information indicating a maximum data rate available for respective subchannels of the selected user terminals.

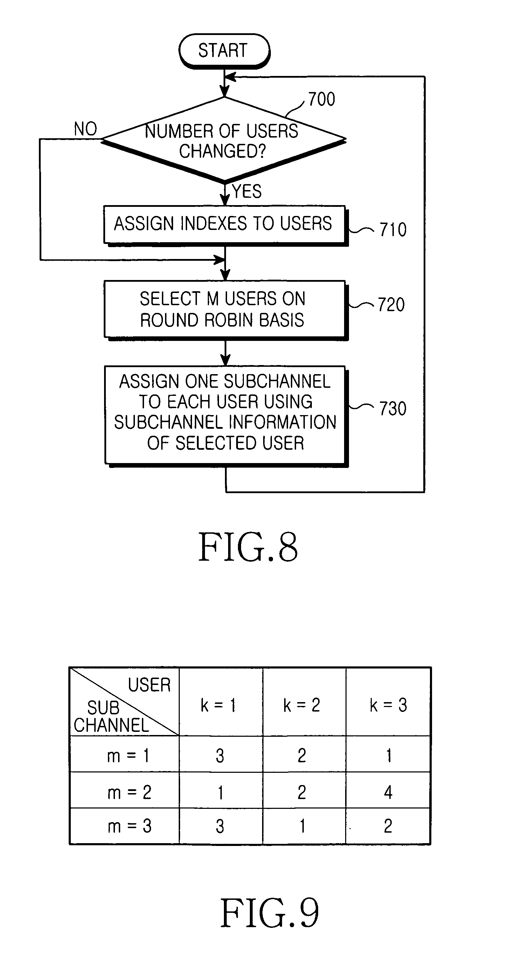

FIG. 8 is a flowchart illustrating an operation of the subchannel and data rate assignment information generator 530 of FIG. 7 according to an embodiment of the present invention. Here, FIG. 8 illustrates a method of assigning M subchannels to M users selected on a round robin basis so that the sum of data rates is maximized. When subchannels are assigned, a data rate of each subchannel is automatically determined from subchannel assignment information of the corresponding user. Likewise, the steps shown herein are repeatedly performed every time slot.

In step 700, the subchannel and data rate assignment information generator 530 checks the number of users having data to transmit in the user data memory 550 and examines whether the number of the users has increased or decreased from the previous time slot, to determine whether the number of users has been changed. If the number of users is changed, the subchannel and data rate assignment information generator 530 assigns unique indexes to the users in step 710, in order to identify each of the users. For example, if the number of users having data to transmit is K, indexes of 1, 2, ⋯, K are assigned to the users. If the number of users increases by L from K at a certain time slot, the added L users are assigned indexes of K+1, K+2, ⋯, K+L, with the original K user indexes left. If, however, the number of users decreases by L from K, the remaining users are sequentially assigned indexes of 1, 2, ⋯, K-L. This is to prevent the existing users from being repeatedly selected.

In step 720, the subchannel and data rate assignment information generator 530 selects as many users as the number M of assignable subchannels among the K users on a round robin basis. If K=10 and M=4, for example users selected in each time slot are given by {1, 2, 3, 4}, {5, 6, 7, 8}, {9, 10, 1, 2}, {3, 4, 5, 6}, and so on. Here, numerals in {} represent indexes of the selected users. If the number K of users is less than the number M of subchannels, the same user can be repeatedly selected at one time slot. For example, if K=3 and M=4, users selected in each time slot are given by {1, 2, 3, 1 }, {2, 3, 4, 1}, and so on. Alternatively and more generally, particular users with a weight assigned thereto can be more frequently selected. If K=10, M=4 and first to third users have a double weight over the other users, users selected in each time slot are given by {1, 1, 2, 2}, {3, 3, 4, 5}, {6, 7, 8, 9}, {10, 1, 1, 2}, and so on.

If M users are selected, the subchannel and data rate assignment information generator 530 assigns, in step 730, one subchannel to each selected user so that the subchannels are not repeatedly assigned. At this moment, the subchannels are assigned according to a maximum data rate available for subchannels of each selected user so that the overall data rate is maximized.

As a detailed embodiment of the step 730, the subchannel and data rate assignment information generator 530 assigns subchannels and data rates according to a combination for maximizing the sum of maximum data rates among all possible combinations of selected users and assignable subchannels. That is, when M subchannels are assigned to M users, the number of all possible combinations is M! (=M*(M-1)* ⋯ *2*1). Then, by calculating the sum of data rates of subchannels of respective users for the all possible combinations, it is possible to assign the subchannels to the users according to a combination having the largest sum.

FIG. 9 is a table illustrating examples of normalized values of maximum data rates for respective subchannels of a selected user when M=3 and a possible value of a normalized data rate in a range from 1 to 4 (a value determined by dividing a data rate $r_m[k]$ by a possible minimum value of the $r_m[k]$) derived from data rate information.

As illustrated, normalized maximum data rates of the first to third subchannels (m=1,2,3) of the first user (k=1) are 3, 1 and 3, respectively, and normalized maximum data rates of the first to third subchannels (m=1,2,3) of the second user (k=2) are 2, 2 and 1, respectively. Finally, normalized maximum data rates of the first to third subchannels (m=1,2,3) of the third user (k=3) are 1, 4 and 2, respectively. For example, the first subchannel of the first user can support a maximum data rate that is 3 times higher than that of the third subchannel of the second user.

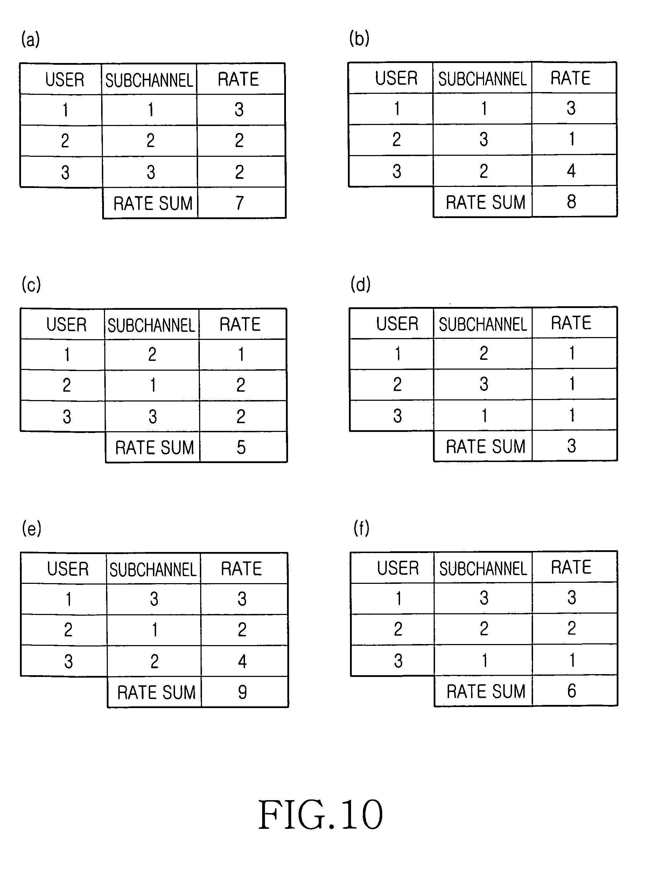

FIGs. 10A to 10F are tables illustrating calculation results of the sum of data rates for a total of 3! (=6) possible combinations between users and subchannels by using the maximum data rate information of respective subchannels shown in FIG. 9. As illustrated, in a combination of FIG. 10E, the sum of normalized data rates is maximized to 9, when the third subchannel is assigned to the first user, the first subchannel is assigned to the second user and the second subchannel is assigned to the third user. In this manner, the subchannel and data rate assignment information generator 530 assigns subchannels and data rates to the users, and then generates assignment information according thereto.

In the above-stated embodiment of the step 730, since a combination that maximizes the sum of maximum data rates must be selected from all possible combinations of users and subchannels, an increase in the number of assignable subchannels increases the number of calculations. As an alternative embodiment of the step 730 proposed to resolve this problem, the subchannel and data rate assignment information generator 530 repeats an operation of assigning one subchannel to one associated user having a maximum data rate among the data rates of respective subchannels for the selected users, until all subchannels are assigned to all users.

More specifically, in step (1), a corresponding subchannel is assigned to a user having the highest data rate among a total of $M^2$ normalized data rates of the selected users. If the number of the highest data rates is 2 or more, the corresponding subchannel is optionally assigned to any one of the associated users. In step (2), a corresponding subchannel is assigned to a user having the highest data rate among $(M-1)^2$ normalized data rates excluding the data rates corresponding to the already assigned user and subchannel. In step (3), the step (2) is repeated until M subchannels are assigned to M users one to one.

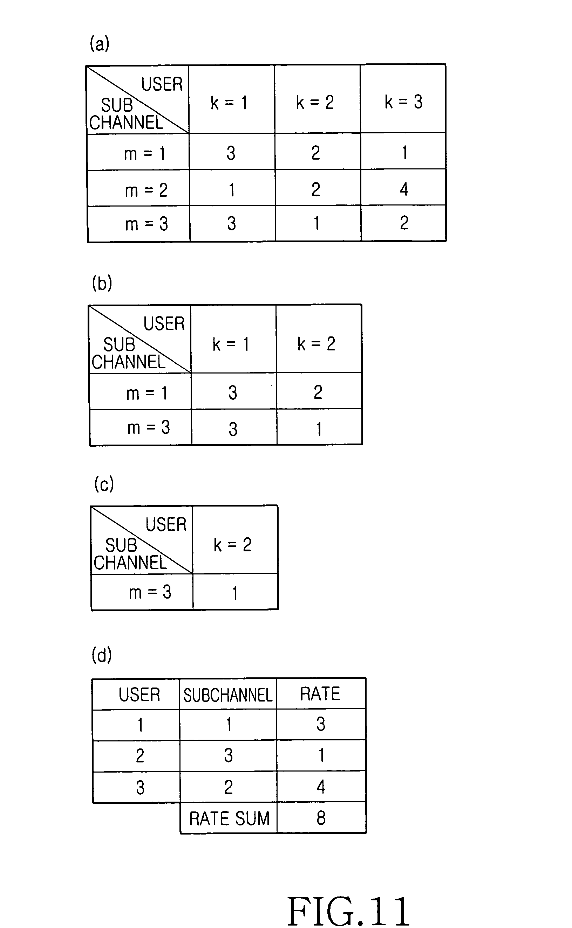

FIGs. 11A to 11D illustrate a procedure for performing the alternative embodiment of the step 730 using the maximum data rate information of respective subchannels shown in FIG. 9.

In FIG. 11A, the highest data rate 4 is selected from 9 data rates, and as a result, the second subchannel is assigned to the third user. In FIG. 11B, the highest data rate 3 is selected from 4 data rates excluding the data rates corresponding to the third user and the second subchannel. However, since the first subchannel and the third subchannel both are available, the optionally selected first subchannel is assigned to the first user. In FIG. 11C, the third subchannel is assigned to the second user according to one remaining data rate 1 excluding the data rates corresponding to the first user and the first subchannel. Resultingly, in FIG. 11D, the first subchannel is assigned to the first user, the second subchannel is assigned to the third user, and the third subchannel is assigned to the second user.

As a result, although the sum of normalized data rates obtained through the method of FIGs. 11A to 11D is 8, which is smaller than the result 9 of FIG. 10E, the method of FIGs. 11A to 11D can dramatically reduce the number of calculations as compared with the method of FIGs. 10A to 10F.

As described above, the subchannel and data rate assignment information generator 530 according to the present invention efficiently assigns subchannels to users by considering data rates, fairness of wireless resource distribution between users (for which a round robin basis is used), and priority of users (for which weights are applied).

The present invention has the following advantages. First, the invention effectively combines variation and independency of user channels with variation and independency of space domain channels by assigning space domain subchannels provided by the multi-transmission/reception antenna system to multiple users, thereby improving a data rate of the wireless communication system. Second, the invention enables data transmission at a higher data rate with limited wireless resources. Third, the invention assigns subchannels to users considering fairness of wireless resource distribution between users and priority of users as well as data rates, thereby improving the quality of a wireless communication service provided to each user.

While the invention has been shown and described with reference to a certain preferred embodiment thereof, it will be understood by those skilled in the art that various changes in form and details may be made therein without departing from the scope of the invention as defined by the appended claims. Specifically, although the invention has been described with reference to an operation of selecting users on a round robin basis and assigning one subchannel to each selected user, it is also possible to improve performance of a wireless communication system including multiple transmission/reception antennas by applying a method of assigning subchannels using a different user selection method or a method of simultaneously performing user selection and subchannel assignment.

**Claims**

1. A wireless communication apparatus for use in a wireless communication system having a base station having M antennas to communicate with K user terminals through a wireless channel, comprising:

   a data rate information recoverer for recovering data rate information indicating an available data rate of each subchannel from the M antennas, from a feedback signal received from the K user terminals;
   a subchannel and data rate assignment information generator for assigning the M subchannels to the K user terminals according to the data rate information and determining data rates of the assigned subchannels; and
   a transmitter for transmitting data for the selected M user terminals to the M user terminals via the assigned M antennas at the determined data rates;

   wherein if K is greater than or equal to M, the subchannel and data rate assignment information generator assigns the M subchannels to the M user terminals selected from the K user terminals on a round robin basis, in every time slot.

2. The wireless communication apparatus of claim 1, wherein the subchannel and data rate assignment information generator comprises:

   means for assigning a corresponding subchannel to a user terminal supporting a maximum data rate among the selected M user terminals according to data rate information of the K user terminals; and
   means for assigning a corresponding subchannel to a user terminal supporting a maximum data rate among remaining data rates excluding data rates corresponding to already assigned user terminal and subchannel until the M subchannels are assigned to the selected M user terminals one to one.

3. The wireless communication apparatus of claim 1 or 2, wherein the subchannel and data rate assignment information generator comprises:

   means for calculating the sum of data rates for all possible combinations of the selected M user terminals and the M subchannels according to data rate information of the K user terminals; and
   means for assigning a corresponding subchannel to a user terminal corresponding to a combination for which the calculated sum of data rates is maximized.

4. The wireless communication apparatus of one of claims 1 to 3, wherein the transmitter comprises:

   a subchannel and data rate assignor for encoding and modulating data for the selected M user terminals according to the determined data rates;
   a spatial multiplexing data generator for generating transmission data signals by spatial multiplexing of the encoded and modulated data according to the assigned subchannels; and
   a channel multiplexer for multiplexing the data signals with signals on other channels and transmitting the multiplexed signals to the K user terminals via the M antennas.

5. The wireless communication apparatus of one of claims 1 to 4, wherein the base station further comprises a channel estimator for estimating uplink channel characteristics corresponding to the K user terminals from uplink pilot signals received from the K user terminals and providing the estimated uplink channel characteristics to the data rate information recoverer so that the estimated uplink channel characteristics are used in recovering the data rate information.

6. The wireless communication apparatus of one of claims 1 to 5, wherein each of the K user terminals includes at least M antennas to communicate with the base station via the M antennas.

7. The wireless communication apparatus of one of claims 1 to 6, wherein each of the K user terminals comprises:

   at least M antennas for receiving a downlink pilot signal, a control signal and a data signal from the base station over an assigned subchannel;
   a channel estimator for estimating a downlink channel characteristic corresponding to the base station from the downlink pilot signal;
   a subchannel assignment information recoverer for recovering subchannel assignment information from the control signal using the estimated downlink channel characteristic;
a data detector for detecting data from the data signal by using the estimated downlink channel characteristic, subchannel assignment information determined in the subchannel assignment information recoverer, and previous subchannel assignment information;
a data rate information generator for calculating maximum data rates available for each of M assignable subchannels from the base station, from the estimated downlink channel characteristic; and
a channel multiplexer for multiplexing a feedback signal including the data rate information with signals on other channels and transmitting the multiplexed signal to the base station via the M or more antennas.

8. A method for performing wireless communication by a base station in a wireless communication system having the base station having M antennas to communicate with K user terminals over a wireless channel, comprising the steps of:

recovering from feedback signals received from the K user terminals data rate information indicating an available data rate of each subchannel from the M antennas;
assigning the M subchannels to the K user terminals every time slot according to the data rate information, determining data rates of the assigned subchannels, and assigning the M subchannels to M user terminals selected from the K user terminals on a round robin basis, in each time slot, when K is greater than or equal to M; and
transmitting data for the selected M user terminals to the M user terminals via the assigned M antennas at the determined data rates.

9. The method of claim 8, wherein the assignment step comprises the steps of:

assigning indexes to the K communicable user terminals every time slot; and
selecting user terminals by the M user terminals in order of the assigned indexes.

10. The method of claim 9, wherein the index assignment step comprises the steps of:

determining at each time slot whether the number of communicable user terminals has been changed;
if the number of user terminals increases, assigning additional indexes following the already assigned indexes to the added user terminals; and
if the number of user terminals decreases, removing indexes assigned to the reduced user terminals.

11. The method of one of claims 8 to 10, wherein the assignment step comprises the steps of:

assigning a corresponding subchannel to a user terminal supporting a maximum data rate among the selected M user terminals according to data rate information of the K user terminals; and
assigning a corresponding subchannel to a user terminal supporting a maximum data rate among remaining data rates excluding data rates corresponding to the already assigned user terminal and subchannel until the M subchannels are assigned to the selected M user terminals one to one.

12. The method of one of claims 8 to 11, wherein the assignment step comprises the steps of:

calculating the sum of data rates for all possible combinations of the selected M user terminals and the M subchannels according to data rate information of the K user terminals; and
assigning a corresponding subchannel to a user terminal corresponding to a combination for which the calculated sum of data rates is maximized.

13. The method of one of claims 8 to 12, wherein the transmission step comprises the steps of:

encoding and modulating data for the selected M user terminals according to the determined data rates;
generating transmission data signals by spatial-multiplexing the encoded and modulated data according to the assigned subchannels; and
multiplexing the data signals with signals on other channels and transmitting the multiplexed signals to the K user terminals via the M antennas.

14. The method of one of claims 8 to 13, further comprising the step of estimating uplink channel characteristics corresponding to the K user terminals from uplink pilot signals received from the K user terminals, in order to use the estimated uplink channel characteristics in recovering the data rate information.

FIG.1

FIG.2

FIG.3

USER TERMINAL #1

TX/RX SIGNAL PROCESSING — 22-1

BASE STATION — 210

TX/RX SIGNAL PROCESSING

USER TERMINAL #2

TX/RX SIGNAL PROCESSING — 22-2

USER TERMINAL #K

TX/RX SIGNAL PROCESSING — 22-K

FIG.4

START

DETECT DATA TRANSMITTED TO EACH USER AFTER ESTIMATING DOWNLINK WIRELESS CHANNEL AND RESTORING SUBCHANNEL ASSIGNMENT INFORMATION — 300

GENERATE FEEDBACK INFORMATION BY CALCULATING MAXIMUM DATA RATE OF EACH SUBCHANNEL AND TRANSMIT GENERATED FEEDBACK INFORMATION TO BASE STATION OVER UPLINK FEEDBACK CHANNEL — 310

ESTIMATE UPLINK CHANNEL OF EACH USER AND GENERATE SUBCHANNEL AND DATA RATE ASSIGNMENT INFORMATION BY RECOVERER FEEDBACK INFORMATION FOR DATA RATE OF SUBCHANNEL — 320

GENERATE SUBCHANNEL ASSIGNMENT INFORMATION AS CONTROL SIGNAL, GENERATE DATA SIGNAL THROUGH SPACE DIVISION MULTIPLEXING, MULTIPLEX GENERATED SIGNALS WITH PILOT SIGNAL, AND TRANSMIT MULTIPLEXED SIGNAL TO USER TERMINAL — 330

FIG.5

400

410 CHANNEL ESTIMATOR

Nr(k)xNt

$H_D[k]$

420 SUBCHANNEL ASSIGNMENT INFORMATION RECOVERER

Nr(k)

Nr(k)

$y[k]$

M / A

430 DATA DETECTOR

0~M

Nr(k)

460 CHANNEL MULTIPLEXER

$R[k]$

440 DATA RATE INFORMATION GENERATOR

M

450 DELAY GENERATOR

PILOT SIGNAL #k

FIG.6

FIG.7

EP 1 463 226 A2

FIG.8

| | USER | | |
|---|---|---|---|
| SUB CHANNEL | k = 1 | k = 2 | k = 3 |
| m = 1 | 3 | 2 | 1 |
| m = 2 | 1 | 2 | 4 |
| m = 3 | 3 | 1 | 2 |

FIG.9

(a)

| USER | SUBCHANNEL | RATE |
|------|-----------|------|
| 1 | 1 | 3 |
| 2 | 2 | 2 |
| 3 | 3 | 2 |
| | RATE SUM | 7 |

(b)

| USER | SUBCHANNEL | RATE |
|------|-----------|------|
| 1 | 1 | 3 |
| 2 | 3 | 1 |
| 3 | 2 | 4 |
| | RATE SUM | 8 |

(c)

| USER | SUBCHANNEL | RATE |
|------|-----------|------|
| 1 | 2 | 1 |
| 2 | 1 | 2 |
| 3 | 3 | 2 |
| | RATE SUM | 5 |

(d)

| USER | SUBCHANNEL | RATE |
|------|-----------|------|
| 1 | 2 | 1 |
| 2 | 3 | 1 |
| 3 | 1 | 1 |
| | RATE SUM | 3 |

(e)

| USER | SUBCHANNEL | RATE |
|------|-----------|------|
| 1 | 3 | 3 |
| 2 | 1 | 2 |
| 3 | 2 | 4 |
| | RATE SUM | 9 |

(f)

| USER | SUBCHANNEL | RATE |
|------|-----------|------|
| 1 | 3 | 3 |
| 2 | 2 | 2 |
| 3 | 1 | 1 |
| | RATE SUM | 6 |

# FIG.10

(a)

| SUB CHANNEL \ USER | k = 1 | k = 2 | k = 3 |
|---|---|---|---|
| m = 1 | 3 | 2 | 1 |
| m = 2 | 1 | 2 | 4 |
| m = 3 | 3 | 1 | 2 |

(b)

| SUB CHANNEL \ USER | k = 1 | k = 2 |
|---|---|---|
| m = 1 | 3 | 2 |
| m = 3 | 3 | 1 |

(c)

| SUB CHANNEL \ USER | k = 2 |
|---|---|
| m = 3 | 1 |

(d)

| USER | SUBCHANNEL | RATE |
|---|---|---|
| 1 | 1 | 3 |
| 2 | 3 | 1 |
| 3 | 2 | 4 |
|  | RATE SUM | 8 |

FIG.11